# EUROPÄISCHE PATENTSCHRIFT

(11) **EP 2 169 761 B1**
(45) Veröffentlichungstag und Bekanntmachung des Hinweises auf die Patenterteilung: **04.09.2013**
(21) Anmeldenummer: 09009783.3
(22) Anmeldetag: 29.07.2009
(51) Int. Cl.: H01Q 1/22, G06K 7/10, B65F 3/04, H01Q 7/00, B65F 1/14

(54) **Schüttung mit RFID-Antenne**
Tipping device with RFID antenna
Dispositif de décharge avec antenne RFID

(30) Priorität: 30.09.2008 DE 102008049744
(43) Veröffentlichungstag der Anmeldung: 31.03.2010
(73) Patentinhaber: SULO Umwelttechnik GmbH, 32051 Herford (DE)
(72) Erfinder: Röttger, Volker, 88477 Schwendi (DE)
(74) Vertreter: Remy, Vincent Noel Paul

(56) Entgegenhaltungen:
- WO-A1-99/50788
- DE-A1- 19 708 204
- DE-T2- 69 515 478
- FR-A1- 2 707 269

## Beschreibung

Die Erfindung betrifft eine RFID-Antenne, umfassend ein Gehäuse mit einer darin angeordneten Antennenwicklung. Die Erfindung betrifft weiterhin eine Schüttung eines Müllfahrzeugs mit einem zumindest abschnittsweise kreissegmentförmig ausgebildeten Aufnahmekamm zum Untergreifen eines Aufnahmekragens einer Mülltonne.

Im Stand der Technik, wie z.B. in DE 695 15 478T2, ist es allgemein bekannt, an Müllfahrzeugen für die Entsorgung von Müll aus Mülltonnen eine sogenannte Schüttung anzuordnen, die einen Aufnahmekamm aufweist, mittels dem ein Aufnahmekragen einer Mülltonne untergriffen werden kann, um eine an die Schüttung herangestellte Mülltonne anzuheben, in die Überkopfposition zu bewegen und so den Müll aus der Mülltonne zu entleeren.

Dabei sind im Stand der Technik einerseits Aufnahmekämme bekannt, die eine gerade, lineare Erstreckung aufweisen, wobei die entsprechenden Mülltonnen, die zur Entleerung mit derartigen Aufnahmekämmen vorgesehen sind, einen entsprechenden ausgeformten Aufnahmekragen bzw. darin angeordneten Aufnahmebereich aufweisen. Üblicherweise handelt es sich dabei um Mülltonnen mit im Wesentlichen rechteckförmigen Grundkörper, die dementsprechend eine zum geraden Aufnahmekamm verlaufende vordere Gehäusewandung aufweisen. Hierbei wird derjenige Teil einer Mülltonne als vorne liegend bezeichnet, an den der Aufnahmekamm angreift und bei denen bei üblichen Mülltonnen, z.B. mit 240 Litern Volumen, das vorgesehene Gelenk des Drehdeckels auf der gegenüberliegenden Rückseite der Mülltonne angeordnet ist.

Im Stand der Technik sind weiterhin Mülltonnen bekannt, die abweichend von der im Wesentlichen viereckigen Grundform des Gehäusekörpers wenigstens eine vordere Wandung aufweisen, die zylindrisch, zumindest teilzylindrisch ausgeformt ist und demnach im Querschnitt zumindest in einem vorderen Wandbereich teilkreisförmig geformt ist. Es ist bekannt, ebenso Mülltonnen dieser Form mit den Schüttungen von Müllfahrzeugen zu entleeren, wobei in diesem Fall die Schüttung einen Aufnahmekamm aufweist, der zumindest abschnittsweise kreissegmentförmig ausgebildet ist und ebenfalls zum Untergreifen eines Aufnahmekragens einer Mülltonne dient, wobei der Aufnahmekragen, wenn er auch eine gegebenenfalls geradlinig erstreckte vordere Kante aufweist, so doch einen unteren kreissegmentförmig ausgestalteten Aufnahmebereich aufweist, in welchen ein solcher kreissegmentförmig ausgebildeter Aufnahmekamm eingreifen kann.

Derartige Mülltonnen und kreissegmentförmig ausgebildete Aufnahmekämme an Schüttungen von Müllfahrzeugen kommen vermehrt zum Einsatz, wenn es beabsichtigt ist, Müllbehälter automatisiert zu ergreifen und zu entleeren, gegebenenfalls sogar ohne den Einsatz von Müllwerkern, da derartige Müllbehälter mit kreissegmentförmig gebogenen Aufnahmebereichen sowie die kreissegmentförmig ausgebildeten Aufnahmekämme der korrespondierenden Schüttungen eine größere Winkel-Positionierungstoleranz zueinander aufweisen und demnach leichter automatisiert durch die Schüttung eines Müllfahrzeugs ergriffen werden können.

Es ist weiterhin auch bekannt, Müllbehälter bereit zu stellen, die einen Aufnahmekragen aufweisen, der geeignet ist, beide Arten von vorgenannten Aufnahmekämmen aufzunehmen, so dass derartige Mülltonnen unabhängig von der Art der realisierten Schüttung problemlos entleert werden können. Insbesondere die letztgenannten Müllbehälter werden auch als Multifunktionsbehälter (MFB) von der Anmelderin bezeichnet.

Es ist weiterhin im Stand der Technik bekannt, mittels der RFID-Technik (radio frequency identification) beim Leeren eines Müllbehälters Identifikationsdaten aus dem Müllbehälter zu erfassen, insbesondere um Müllgebühren in der Zuordnung zu den jeweiligen Haushalten erfassen und abrechnen zu können. Dafür ist es vorgesehen, an einer Schüttung eines Müllfahrzeugs eine Leseeinheit mit einer RFID-Antenne anzuordnen, um die Daten aus einem RFID-Transponder, der an oder in der Mülltonne angeordnet ist, auszulesen. Anhand der ausgelesenen Daten kann festgestellt werden, welchem Haushalt oder welchen Personen die entsprechend geleerte Mülltonne zugeordnet ist und die Müllgebühren können individuell in Rechnung gestellt werden.

Auch können so automatisch Sperrvermerke durch Abgleich der erfassten Daten mit den in einer Datenbank gespeicherten Daten berücksichtigt werden, so dass gegebenenfalls eine Mülltonne bei Vorliegen eines Sperrvermerks nicht geleert wird. Die Datenerfassung durch das Auslesen von Daten aus den Transpondern von Mülltonnen dient insbesondere auch dazu, neben der Identifizierung einer Mülltonne die beim Entleerungsvorgang erfassten Gewichte der jeweils identifizierten Mülltonne zuordnen zu können, um so eine gewichtsabhängige Entleerung realisieren zu können.

Es kann allgemein vorgesehen sein, dass ein Transponder-Lesegerät im Bereich der am Fahrzeug verbauten Schüttung als z.B. externe Komponente befestigt ist und mit Hilfe einer angeschlossenen RFID-Antenne, die regelmäßig als Spulenwicklung mit einem umgebenden üblicherweise quaderförmigen Gehäuse ausgebildet und ebenfalls an der Schüttung angeordnet ist, ein elektromagnetisches Feld erzeugt, beispielsweise von 125 Kilohertz, 134 Kilohertz oder auch 13.56 MHz.

Mittels eines solchen Feldes können passive Transponder, die in Mülltonnen z.B. in einem entsprechend vorgesehenen Chipnest verbaut sind, berührungslos erfasst werden, indem eine im Transponder gespeicherte Nummer oder sonstige Identifikationsdaten aus diesem Transponder ausgelesen werden und über eine Schnittstelle des Lesegerätes an eine übergeordnete Steuerung übermittelt werden.

Das elektromagnetische Feld, das über die Antenne an die Umgebung abgestrahlt wird, dient bevorzugt dabei auch dazu, einen passiven Transponder mit Energie zu versorgen, um diesen in die Lage zu versetzen, mittels der empfangenen Energie seine Daten auszusenden und diese sodann mit derselben Antenne zu empfangen und in der nachfolgenden übergeordneten Steuerung auszuwerten. Bei dieser Art der Informationsübermittlung ist es demnach notwendig, dass der Transponder, der an einer Mülltonne verbaut ist, mit hoher Sicherheit in den Bereich dieses elektromagnetischen Feldes eintritt, welches von der Antenne erzeugt wird.

Aus diesem Grunde ist es nach EN DIN bzw. auch nach Vorgaben des Bundesverbandes der deutschen Entsorgungswirtschaft festgelegt, an welchen Positionen bei bisherigen üblichen Mülltonnen bzw. Schüttungen die Antennen der RFID-Lesegeräte bzw. die RFID-Transponder an den Mülltonnen zu befestigen sind.

Bei einer Aufsicht von hinten auf die Schüttung eines Müllfahrzeugs ist es dabei vorgesehen, dass die Antenne mit ihrem Gehäuse am jeweiligen rechten Endbereich eines geradlinig erstreckten Aufnahmekammes angeordnet ist. Dementsprechend ist es vorgesehen, mit Bezug auf die Ansicht auf die Front eines üblichen Müllbehälters mit geradlinig erstrecktem Aufnahmebereich zur Aufnahme des vorgenannten geraden Kammes das sogenannte Chipnest, d.h. eine Aufnahme für einen passiven Transponder, linksseitig anzuordnen, so dass beim Eingreifen eines Aufnahmekammes in den Aufnahmebereich am Aufnahmekragen einer Mülltonne der Transponder unmittelbar in dem Bereich der Antenne, insbesondere oberhalb der Antenne, angeordnet ist.

Die Erfüllung dieser Vorgaben und Realisierung an Schüttung und Mülltonne ist problemlos möglich bei den vorgenannten klassischen Schüttungen mit geraden

Kämmen, da in einem solchen Fall eine ohnehin sehr präzise Positionierung zwischen Mülltonne und Schüttung zu erfolgen hat. Demgegenüber ist es bei den neuartigen Mülltonnen mit einer im Wesentlichen zumindest teilzylindrischen Frontfläche und kreissegmentförmigen Aufnahmebereichen zur Aufnahme eines ebenso kreissegmentförmig gebogenen Aufnahmekammes einer Schüttung als Problem bekannt, dass der Vorteil, den Müllbehälter relativ zum Aufnahmekamm der Schüttung nicht mehr genau positionieren zu müssen, um ein sicheres Ergreifen zu erreichen, mit dem Nachteil einhergeht, dass die relative Positionierung von Transponder an der Mülltonne und Antenne an der Schüttung nicht mehr in einer genügenden Genauigkeit vorhersagbar ist. So zeigten selbst mittige Anordnungen von Transpondern relativ zum vorderen Kragen eines Müllbehälters sowie die mittige Anordnung von Antennen relativ zum kreissegmentförmig gebogenen Aufnahmekamm je nach Positionierung der Mülltonne eine nicht ausreichende Überdeckung zwischen dem elektromagnetischen Feld der Antenne und dem Transponder der Mülltonne, so dass oftmals die Identifikationsdaten aus den Transpondern der Mülltonnen nicht ausgelesen werden konnten.

Aufgabe der Erfindung ist es, eine Schüttung mit einer RFID-Antenne bereit zu stellen, die eine genügend große Positionstoleranz zwischen der Schüttung und Mülltonne bereitstellt und darüber hinaus die Vorgaben gemäß EN DIN und Bund der deutschen Entsorgungswirtschaft erfüllt.

Die Aufgabe wird erfindungsgemäß durch Anspruch 1 gelöst.

Eine derartige RFID-Antenne hat den erfindungsgemäßen Vorteil, dass sie mit ihrer konkav geformten vorderen Stirnseitenfläche insbesondere an den Endbereich eines kreissegmentförmig geformten Aufnahmekamms zumindest im Wesentlichen formschlüssig angelegt werden kann, wobei die Möglichkeit besteht, eine Spulenwicklung innerhalb des Gehäuses, die als Antennenwicklung dient, der gegebenen kreissegmentförmigen Krümmung des Aufnahmekamms über die Länge des Gehäuses folgen zu lassen, so dass die Antenne einen Erfassungsbereich schafft, der sich zumindest über einen Teilbereich des kreissegmentförmig geformten Aufnahmekamms erstreckt, insbesondere wobei dieser Teilbereich an einem Endbereich des Aufnahmekamms liegt und gegebenenfalls darüber hinaus ergeht, insbesondere in dem Fall, wenn es in einer vorteilhaften Weiterbildung vorgesehen ist, dass das Antennengehäuse mit einem Endbereich über das Ende des Aufnahmekamms hinausragt.

So deckt eine in dem Antennengehäuse, der Form des Antennengehäuses zumindest im Teilbreich folgende bzw. diese Form nachzeichnende Antennenwicklung einen Erfassungsbereich ab, der ebenso zumindest im wesentlichen kreissegmentförmig und bevorzugt eine Erstreckung über einen vorgegebenen Winkelbereich aufweist. So ergibt sich hierdurch eine Winkelpositionierungstoleranz, die wenigstens dem gekrümmten Erfassungsbereich entspricht.

Aufgrund der konkav ausgebildeten vorderen Stirnseitenfläche des Gehäuses kann dieses eng anliegend, insbesondere formschlüssig an die konvexe Außenseite des Aufnahmekamms angeordnet werden und somit die größtmögliche Nähe zum Aufnahmekamm erzielen. Es besteht darüber hinaus die die bevorzugte Möglichkeit, ein derartiges Gehäuse, bezogen auf die Mitte des kreissegmentförmigen Aufnahmekamms, seitlich versetzt anzuordnen, um so die Vorgabe des Bundes der deutschen Entsorgungswirtschaft zu erfüllen, dass ein Chipnest zur Aufnahme eines passiven Transponders an einer Mülltonne im vorderen linken Bereich des Kragens einer Mülltonne angeordnet ist. Durch die Erstreckung der Antennenwicklung, die zumindest bereichsweise im Inneren des Gehäuses der konkaven Außenform des Gehäuses folgt, wird eine maximale mögliche Überdeckung zwischen dem erzeugten Feld und der Position eines Transponders relativ dazu erzielt, selbst wenn eine Mülltonne in unterschiedlichen Winkeln relativ zum Aufnahmekamm auf diesem positioniert wird.

Bezüglich der hier gemachten Richtungsangaben ist festzuhalten, dass es sich bei der vorderen Stirnseitenfläche des Gehäuses der RFID-Antenne um diejenige handelt, die an die konvexe Außenseite eines Aufnahmekamms angelegt wird. Dabei ist diese Stirnseitenfläche konkav ausgebildet für einen Betrachter, der seinen Blick auf diese vordere Stirnseitenfläche richtet.

Für die grundsätzliche Funktion einer solchen erfindungsgemäßen Antenne ist die Anordnung der weiteren, am Gehäuse vorgesehenen Stirnseitenflächen von untergeordneter Relevanz. Es erweist sich hier jedoch in bevorzugter Ausführung als vorteilhaft, wenn eine der konkav ausgebildeten vorderen Stirnseitenflächen gegenüberliegende hintere Stirnseitenfläche des Gehäuses konvex ausgebildet ist (für einen Betrachter in Aufsicht auf diese Fläche). So kann erreicht werden, dass auch die hintere Stirnseitenfläche beispielsweise die grundsätzliche Kreissegmentform eines Aufnahmekamms nachzeichnet.

Es kann beispielsweise vorgesehen sein, dass der Radius der konvexen hinteren Stirnseitenfläche größer ist als der Radius der konkav ausgebildeten vorderen Stirnseitenfläche, wobei eine Ausführung realisiert werden kann, bei welcher die Breite des Gehäuses aufgrund der Anpassung der beiden Radien im Wesentlichen, über die Erstreckung des Gehäuses gleich ist. Das Antennengehäuse erscheint dabei insgesamt kreisbogenförmig ausgestaltet bzw. Ringsegmentförmig, was im wesentlichen erreicht wird, wenn die Mittelpunkte der Radien zusammenfallen.

In einer weiteren bevorzugten Ausbildung kann es auch vorgesehen sein, dass die Mittelpunkte der Krümmungen bzw. Radien beider hier betrachteter Stirnseitenflächen zwar auf einer Seite des Gehäuses angeordnet sind, dabei jedoch entgegen dem vorgenannten Fall nicht zusammenfallen, sondern auseinanderfallen, so dass sich eine Gehäuseform ergibt, die sich in die Richtung zu einem seitlich Endbereich des Gehäuses verjüngt. Es ergeben sich demnach bei einer solchen RFID-Antenne zwei Endbereiche, von denen einerr einen schmalen Endbereich und der andere einen demgegenüber breiteren Endbereich bildet. Es kann hierbei vorgesehen sein, das Antennengehäuse derart an dem Kamm einer Schüttung zu befestigen, dass der Bereich des schmalen Endes an dem Aufnahmekamm angeordnet ist, und das Antennengehäuse mit seinem breiteren Endbereich über das Ende des Aufnahmekamms hinausragt. Durch die Verbreiterung wird dabei die Winkeltoleranz weiter erhöht.

Die Gestaltung des Gehäuses kann dabei derart weitergebildet sein, dass die vordere Stirnseitenfläche und die hintere Stirnseitenfläche am schmalen Endbereich des Gehäuses durch eine planare seitliche Fläche verbunden sind, wobei es in einer bevorzugten Ausgestaltung vorgesehen sein kann, dass in der Ebene dieser seitlichen planaren Fläche der Mittelpunkt der Krümmung der vorderen konkaven Stirnseitenfläche angeordnet ist. Hierdurch wird erreicht, dass diese seitliche planare Fläche des Gehäuses beispielsweise in der Nähe eines versteifenden oder tragenden Elementes des kreissegmentförmig gebogenen Aufnahmekamms positioniert werden kann, welches in radialer Richtung von dem Kamm absteht und damit parallel zu dieser planaren Fläche angeordnet ist. Bei der zuvor beschriebenen Gehäuseausgestaltung kann es dabei vorgesehen sein, dass die vordere und hintere Stirnseitenfläche jeweils durch einen Gehäusebereich mit gleichem Krümmungsradius in die planare seitliche Fläche, insbesondere stetig übergehen.

In einer weiterhin bevorzugten Ausführung kann es auch vorgesehen sein, dass die vordere Stirnseitenfläche und die hintere Stirnseitenfläche am breiten Endbereich des Gehäuses durch zwei konvexe Gehäusebereiche verbunden sind, insbesondere die einen unterschiedlich großen Krümmungsradius aufweisen, wobei es vorgesehen sein kann, dass ein Gehäusebereich mit dem kleineren Krümmungsradius an die vordere Stirnseitenfläche angrenzt und ein Gehäusebereich mit dem größeren Krümmungsradius an die hintere Stirnseitenfläche. Hierdurch ergibt sich ein unsymmetrisches breites Ende der Gehäuseform, wobei insgesamt eine im Querschnitt im Wesentlichen tropfenförmige Ausgestaltung des Gehäuses erreicht wird.

Diese tropfenförmige Ausgestaltung kann jedoch auch unabhängig von den zuvor beschriebenen konkreten Formgebungen durch andere äußere Formen des Gehäuses realisiert werden.

Auch bei dem breiten Endbereich kann es vorgesehen sein, dass dieser einen planaren Flächenbereich umfasst, der in einem Winkel ungleich Null zu dem planaren Flächenbereich am schmalen Endbereich angeordnet ist, insbesondere unter einem Winkel von ca. 30 Grad. Beispielsweise kann in der Ebene dieses planaren Flächenbereiches der Mittelpunkt der Krümmung der hinteren konvexen Stirnseitenfläche angeordnet sein. So entspricht der genannte Winkel von z.B. 30 Grad im wesentlichen auch dem Winkel, welcher von der Spulenwicklung im Inneren des Gehäuses erreicht wird und den Erfassungsbereich in seiner unteren Winkelgrenze vorgibt.

Eine bevorzugte Ausgestaltung der Spulenwicklung innerhalb des Gehäuses kann derart sein, dass diese Spulenwicklung in einem gleich bleibenden Abstand zur Gehäuseoberfläche und Gehäuseunterfläche, insbesondere mittig zwischen diesen angeordnet ist, wobei weiterhin die Spulenwicklung in einem gleich bleibenden Abstand zu den jeweiligen seitlichen Flächenbereichen des Gehäuses verlaufen kann. Damit zeichnet die Querschnittsform der in dem Gehäuse vorgesehenen Spulenwicklung die äußere Querschnittsform des Gehäuses der erfindungsgemäßen RFID-Antenne nach, korrespondiert also zu dieser und kann demnach also auch in bevorzugter Ausführung tropfenförmig ausgestaltet sein. Insbesondere bei dieser tropfenförmigen Ausgestaltung wird erreicht, dass auch die in dem Gehäuse gegebene Spulenwicklung ein schmales und ein breites Ende aufweist, wobei das schmale Ende zur Mitte des Aufnahmekamms weist und das breite Ende zum Endbereich des Aufnahmekamms, insbesondere sogar über dieses Ende des Aufnahmekamms in Fortsetzung des Kreissegmentes übersteht.

Zwar wird durch die breitere Spulenwicklung an diesem Ort die Feldstärke herabgesetzt, der örtliche Erfassungsbereich jedoch vergrößert, so dass bei einer Positionierung einer Mülltonne an einem derartig kreissegmentförmigen Aufnahmekamm mit einer erfindungsgemäßen Antenne eine hohe Wahrscheinlichkeit der Überdeckung des erzeugten elektrischen Feldes mit dem Transponder der Mülltonne erzielt wird.

In einer bevorzugten Ausführung der RFID-Antenne gemäß der beschriebenen Erfindung kann es vorgesehen sein, dass das Gehäuse aus einem elastischen Material, wie beispielsweise einem Gummi, ausgebildet ist. Dies hat zum einen den Vorteil, dass ein solches Gehäuse beispielsweise im Spritzgussverfahren hergestellt werden kann und beispielsweise eine Spulenwicklung bei der Herstellung direkt in das Gehäuse eingelegt werden kann.

Es besteht ebenso auch die Möglichkeit, dass das Gehäuse ein Gehäuseunterteil und ein Gehäuseoberteil aufweist, die miteinander verbunden sind, insbesondere stoffschlüssig und dabei die Spulenwicklung umgeben, wobei eine stoffschlüssige Verbindung, z.B. durch Verkleben oder Vulkanisieren, erzielt werden kann. Insbesondere die Ausgestaltung des Gehäuses aus einem Gummimaterial bzw. einem sonstigen elastomeren Material hat den Vorteil, dass das Antennengehäuse robust ist und bei eventuellen Stößen in der tagtäglichen Bedienung nachgiebig ist und in seine Form zurückkehrt. Ein derartig flexibles Gehäuse neigt demnach weniger zu einer Zerstörung, wie ansonsten gebräuchliche Gehäuse aus einem Hartkunststoff.

Zur Herstellung eines Antennengehäuses aus einem Gehäuseunterteil und einem Gehäuseoberteil kann es dabei vorgesehen sein, dass das Gehäuseunterteil und/oder das Gehäuseoberteil eine Nut aufweist zur Aufnahme der Spulenwicklung. Auch hierbei kann es vorgesehen sein, dass diese Nut in einem gleich bleibenden Abstand zu den seitlichen Flächenbereichen des Gehäuses verläuft, so dass eine in diese Nut eingelegte Spulenwicklung automatisch die äußere Gehäuseform nachzeichnet, dieser Form also im Wesentlichen bis auf die Fläche des Querschnitts entspricht.

In einer möglichen Ausgestaltung kann es vorgesehen sein, dass die Oberfläche und Unterfläche des Gehäuses in zueinander parallelen Ebenen angeordnet sind. Es ergibt sich dadurch eine Ausgestaltung des erfindungsgemäßen Gehäuses mit einer konstanten Dicke über die gesamte Erstreckung des Gehäuses, so dass ein solches Gehäuse, wenn es an dem kreissegmentförmigen Aufnahmekamm angeordnet ist, einen ebenso entsprechenden konstant bleibenden Abstand zum Aufnahmebereich bzw. Aufnahmekamm einer Mülltonne erzielt. So ist eine erfindungsgemäße Antenne dieser Art, bezogen auf die übliche Arbeitsposition einer Schüttung, zur Aufnahme einer Mülltonne ebenso horizontal ausgerichtet wie die Oberseite des kreissegmentförmig gebogenen Aufnahmekamms selbst und damit parallel zum Aufnahmekragen der Mülltonne.

In einer anderen Ausführungsform kann es auch vorgesehen sein, dass die Oberfläche und Unterfläche des Gehäuses, insbesondere bei gleich bleibender Gehäusedicke in wenigstens einer Dimension gekrümmt sind. Es ergibt sich dabei bei einer symmetrisch zur Ober- und Unterfläche angeordneten Spulenwicklung im Inneren des Gehäuses dieselbe Krümmung bei der internen Antennenwicklung wie bei dem äußeren Gehäuse. Das elektromagnetische Feld einer derartigen Antenne ist demnach nicht lediglich gerade nach oben abgestrahlt, sondern kann aufgrund der Krümmung der internen Antenne in zumindest einer Dimension auch signifikante seitlich und/oder nach vorne strahlende Anteile aufweisen. Wesentlich ist es hierbei festzuhalten, dass die äußere Form des Gehäuses nur bevorzugt so wie beschrieben ausgestaltet ist, es kommt jedoch wesentlich darauf an, dass die Spulenwicklung nicht mehr ausschließlich in einer Ebene liegt, sondern eine in wenigstens einer Dimension gekrümmte Fläche bildet, welche die Erfassungscharakteristik definiert, im Wesentlichen unabhängig vom umgebenden Gehäuse.

Bei einer solchen Formgestaltung der Antennenwicklung und / oder des erfindungsgemäßen Antennengehäuses kann es vorgesehen sein, dass im Bereich des schmalen Endes einer solchen Antenne die Ober- und Unterflächen des Gehäuses in zueinander parallelen Ebenen angeordnet sind und in Richtung auf das breite Ende des Gehäuses zu die Ober- und Unterflächen aufgrund der vorgesehenen, zumindest eindimensionalen Krümmung immer weiter aus diesen Ebenen herausgebogen sind. Die Krümmung kann dabei derart angepasst sein, dass die Flächennormale auf der Oberfläche im Bereich des breiten Endes der Antenne in die Richtung zu einem Chipnest bzw. Transponder an einer Mülltonne gerichtet ist. Es lassen sich durch diese Ausgestaltung noch größere Toleranzwinkel zwischen Mülltonne und Schüttung erzielen, ohne dass der Transponder an der Mülltonne aus dem Wirkungsbereich des erzeugten elektromagnetischen Feldes der Antenne entweicht.

Eine Antenne dieser erfindungsgemäßen Art kann demnach derart an einer Schüttung montiert sein, dass die Bereiche von Ober- und Unterfläche am schmalen Ende des Gehäuses im Wesentlichen horizontal montiert sind, wohingegen der Bereich des Antennengehäuses am breiten Ende nach unten aus der Horizontalen heraus sowie bevorzugt auch nach vorne gekrümmt ist, wodurch sich eine zweidimensionale Krümmung des Gehäuses ergibt.

Ausführungsbeispiele der Erfindung sind in den nachfolgenden Figuren dargestellt. Es zeigen:
- Figur 1: eine perspektivische Ansicht einer erfindungsgemäßen Antenne
- Figur 2: den Querschnitt einer solchen Antenne in Aufsicht
- Figur 3: den Einsatz einer solchen Antenne an einer Schüttung eines Müllfahrzeugs mit aufgenommener Mülltonne
- Figur 4: eine zweite Ausführungsform einer erfindungsgemäßen Antenne an der Schüttung eines Müllfahrzeugs mit ebenfalls aufgenommener Mülltonne.

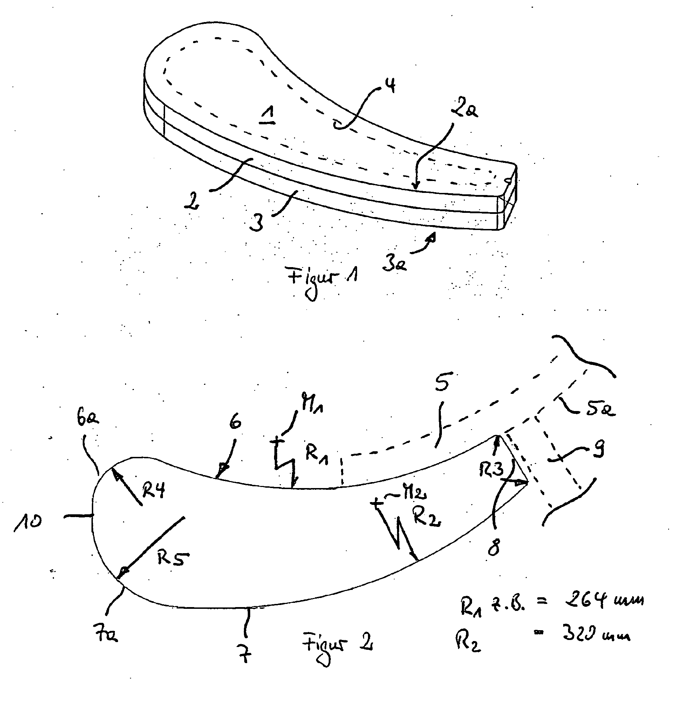

Die Figur 1 zeigt in einer perspektivischen Ansicht eine mögliche Ausgestaltung der erfindungsgemäßen RFID-Antenne 1 mit einem zweiteiligen Gehäuse, welches beispielsweise ein Oberteil 2 und ein Unterteil 3 aufweist, wobei zwischen diesen Teilen hier lediglich andeutungsweise gezeigt eine Antennenwicklung 4 als Spulenwicklung angeordnet ist, die die grundsätzliche Formgestaltung des äußeren umgebenden Gehäuses nachzeichnet. Hier ist die Antennenwicklung 4 derart angeordnet, dass sie zur Oberseite 2a und Unterseite 3a einen gleich bleibenden Abstand aufweist, ebenso wie zu der umlaufenden Seitenfläche der Antenne 1. Die Antennenwicklung 4 kann hierbei einen nicht dargestellten Kabelanschluss aufweisen, der z.B. in Richtung nach unten aus der erfindungsgemäßen Antenne 1 herausragt und zum Anschluß an eine Lesevorrichtung dient.

Die grundsätzliche Formgestaltung erklärt sich anhand der Figur 2, welche in einer Aufsicht von oben die erfindungsgemäße Antenne nach der Figur 1 im Querschnitt zeigt. Hierbei ist weiterhin gestrichelt ein kreissegmentförmiger Aufnahmekamm 5 einer Schüttung eines Müllfahrzeugs dargestellt, um die relative Anordnung zwischen Antenne und Aufnahmekamm 5 zu verdeutlichen. Ersichtlich ist die äußere Formgestaltung der erfindungsgemäßen Antenne 1 derart, dass eine vordere Stirnseitenfläche 6 eine konkave Ausgestaltung mit einem Krümmungsradius R1 aufweist. Dieser Krümmungsradius R1 ist gewählt, so dass er dem Krümmungsradius der Außenseite 5a des kreissegmentförmig gebogenen Kammes 5 entspricht. Z.B. kann der Radius R1 gleich 264 mm sein.

So wird erreicht, dass die erfindungsgemäße Antenne 1 mit ihrer vorderen Stirnseitenfläche 6 zumindest bereichsweise im Wesentlichen formschlüssig an die Außenseite 5a des Aufnahmekamms 5 einer Schüttung angelegt werden kann. In dieser Position kann die Antenne am Aufnahmekamm 5 befestigt werden, so dass die Antenne zusammen mit einer Bewegung des Aufnahmekamms 5 an den Aufnahmekragen einer hier nicht dargestellten Mülltonne heranbewegt wird.

Die weitere Ausgestaltung des Gehäuses der erfindungsgemäßen Antenne 1 ist derart, dass die hintere Stirnseitenfläche 7 eine konvexe Form aufweist mit einem Krümmungsradius R2, der größer gewählt ist als der Krümmungsradius R1, wobei weiterhin die Mittelpunkte der beiden Krümmungen M1 und M2 auseinanderfallen, so dass sich vorliegend eine Formgestaltung ergibt, bei welcher sich die erfindungsgemäße Antenne 1 zum rechtsseitigen Ende hin verjüngt, demnach also in der Breite des Querschnittes abnimmt. Der Radius R2 kann z.B. zu 320 mm gewählt sein.

Das in dieser Darstellung gezeigte rechtsseitige Ende der erfindungsgemäßen Antenne R1 weist dabei eine planare Seitenfläche 8 auf, die hier im Wesentlichen parallel zu einem Befestigungssteg 9 am Aufnahmekamm 5 der Schüttung angeordnet ist. Beispielsweise kann in der Ebene dieser planaren Fläche 8 der Mittelpunkt M1 der Krümmung der vorderen Stirnseitenfläche 6 angeordnet sein, was aufgrund der Dimensionierung des Radius R1 in dieser Figur 2 nicht dargestellt ist.

Sowohl die vordere Stirnseitenfläche 6 als auch die hintere Stirnseitenfläche 7 können in die planare Seitenfläche 8 jeweils mit einem gleichen Krümmungsradius R3, von z.B. 5 mm übergehen, so dass sich am rechtsseitigen schmalen Ende eine stetige äußere Gehäuseform ergibt, die beispielsweise einfach herstellbar und z.B. im Spritzgussverfahren auch einfach entformbar ist.

Das linksseitige, hier breitere Ende der im Wesentlichen tropfenförmigen erfindungsgemäßen Antenne weist einen ersten Flächenbereich 6a auf, der mit einem ersten Krümmungsradius R4 von z.B. 35mm versehen ist und der in dieser Ausführung in einen planaren seitlichen Flächenbereich 10 stetig übergeht. In gleicher Weise geht die hintere Stirnseitenfläche 7 mit einem gekrümmten Bereich 7a, welcher einen Krümmungsradius R5 von z.B. 65 mm aufweist, in denselben planaren Seitenbereich 10 über. Hier ist die Auswahl der Krümmungsradien derart, dass der Krümmungsradius R4 kleiner ist als der Krümmungsradius R5.

Es ergibt sich hierdurch eine optimale Formgestaltung, insbesondere mit Bezug auf die im Inneren in gleicher Form angeordnete Antennenwicklung 4, welche nahe der vorderen Stirnseitenfläche 6 der verlängerten Kreissegmentform des Aufnahmekamms 5 folgt, wobei sich jedoch die Breite der Spulenwicklung 4 in Richtung zum linksseitigen breiten Ende des Gehäuses vergrößert. Hierdurch wird in gleicher Weise der Erfassungsbereich des elektromagnetischen Feldes, welches durch diese Antenne erzeugt wird, in Richtung zum linksseitigen breiten Ende vergrößert, wenn auch dadurch eine Abnahme der Feldstärke in Kauf genommen werden muss.

Bezüglich der Darstellung in den Figuren 1 und 2 ist festzuhalten, dass sämtliche, hier gegebenen Radien lediglich beispielshaft zu verstehen sind und ebenso gut eine Antennenform zum Einsatz kommen kann, die der Kreissegmentform des Aufnahmekamms 5 weiter folgt, dabei jedoch im Wesentlichen konstante Breite des Gehäuses und damit auch der innenliegenden Wicklung aufweist.

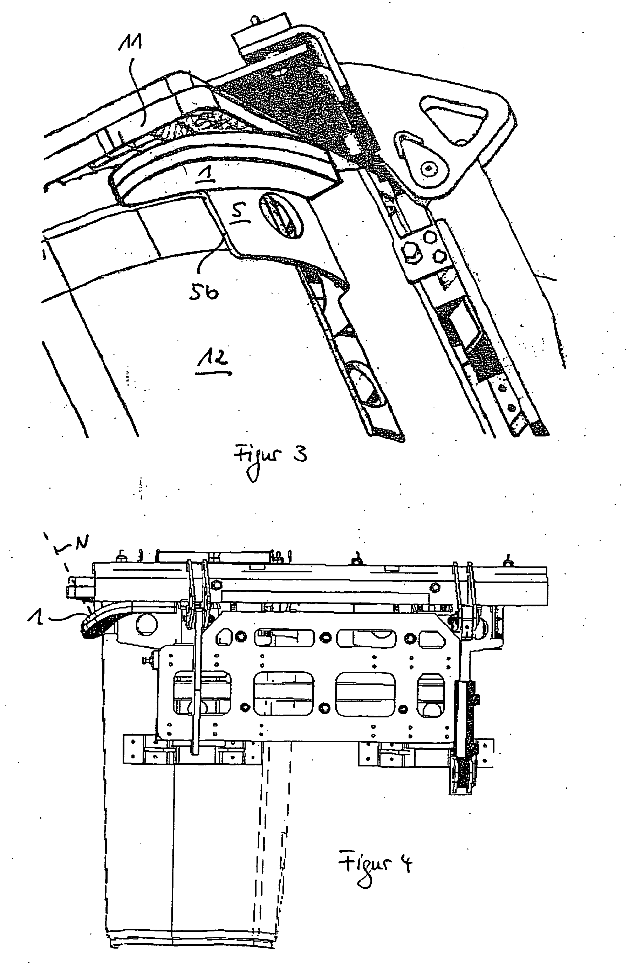

Die Figur 3 zeigt in einer perspektivischen Übersichtsdarstellung die Anordnung eines derartigen erfindungsgemäßen Antennengehäuses mit der darin angeordneten, hier nicht erkennbaren Wicklung in der konkreten Anordnung an einer Müllwagenschüttung mit einem Aufnahmekamm 5, von dem in der vorliegenden Darstellung nur der untere kreissegmentförmige Teil erkennbar ist. Deutlich wird hier, dass die Antenne 1 die Kreissegmenterstreckung des Aufnahmekamms 5 bis über dessen seitliches Ende 5b hinaus fortsetzt und unterhalb des Aufnahmekragens 11 einer von dem Aufnahmekamm 5 aufgenommenen Mülltonne 12 angeordnet ist. Im Bereich des vorderen linken Endes der hier dargestellten Mülltonne 12 kann demnach ein Chipnest für einen Transponder und somit im optimalen Erfassungsbereich dieser so geformten Antenne angeordnet sein.

Ersichtlich ist es demnach so, dass eine Mülltonne relativ zur Schüttung bzw. zum Aufnahmekamm 5 eine hohe Winkeltoleranz aufweist und demnach einen Transponder an der Mülltonne wenigstens über den gesamten Erstreckungsbereich der erfindungsgemäßen Antenne innerhalb des Erfassungsbereichs des elektromagnetischen Feldes angeordnet ist.

Die Figur 4 zeigt gegenüber der Figur 3 eine weitere bevorzugte Ausführungsform, bei welcher erkennbar ist, dass die erfindungsgemäße Antenne 1 eine Formgestaltung aufweist, bei der das rechtsseitige schmale Ende horizontal angeordnet ist, somit also Ober- und Unterfläche horizontal und parallel zueinander an der Schüttung angeordnet sind, wohingegen das linksseitige breitere Ende des Gehäuses eine Abknickung nach rechts unten und nach vorne aufweist, so dass eine gedachte Flächennormale N auf der Oberfläche des Gehäuses 1 seitlich und nach vorne zeigt, wodurch sich eine noch höhere Toleranz bei der Winkelpositionierung einer Mülltonne in der Schüttung ergibt, da selbst Transponder, die aus der unmittelbaren optischen Überdeckung mit der Antenne seitlich herausgedreht sind, durch das elektromagnetische, nach seitlich und nach vorne gerichtete Feld dieser geformten Antenne erfasst werden können.

Hier wird diese Formgestaltung dadurch erreicht, dass sowohl die Oberfläche als auch Unterfläche des Gehäuses in zwei Dimensionen gleichzeitig gekrümmt ist, im linksseitigen breiten Bereich des Gehäuses gegenüber den Ebenen und horizontal ausgerichteten rechtsseitigen schmalen Bereich des Gehäuses.

## Patentansprüche

1. Schüttung eines Müllfahrzeuges mit einem zumindest abschnittsweise kreissegmentförmig ausgebildeten Aufnahmekamm (5) zum Untergreifen eines Aufnahmekragens einer Mülltonne und mit einer RFID-Antenne, die ein Gehäuse mit einer darin angeordneten Antennenwicklung umfasst, und wobei die Spulenwicklung (4) der Antenne (1) zumindest bereichsweise einen kreissegmentförmigen Verlauf aufweist, **dadurch gekennzeichnet, dass** eine vordere Stirnseitenfläche (6) des Gehäuses konkav ausgebildet ist und einen solchen Krümmungsradius (R1) aufweist, dass diese vordere Stirnseitenfläche (6) an der konvexen Aussenseite (5a) des Aufnahmekammes (5), insbesondere dessen Endbereich, zumindest bereichsweise formschlüssig angelegt ist, wobei vorzugsweise der kreissegmentförmigen Verlauf über das Ende des Aufnahmekammes (5) hinausragt.

2. Schüttung nach Anspruch 1, **dadurch gekennzeichnet, dass** eine der konkav ausgebildeten vorderen Stirnseitenfläche (6) gegenüberliegende hintere Stirnseitenfläche (7) des Gehäuses konvex ausgebildet ist.

3. Schüttung nach Anspruch 2, **dadurch gekennzeichnet, dass** der Radius (R2) der konvexen hinteren Stirnseitenfläche (7) grösser ist als der Radius (R1) der konkav ausgebildeten vorderen Stirnseitenfläche (6).

4. Schüttung nach Anspruch 3, **dadurch gekennzeichnet, dass** die Mittelpunkte (M1, M2) der Krümmungen beider Stirnseitenflächen (6,7) derart auseinander fallen, dass sich das Gehäuse in die Richtung zu einem Endbereich verjüngt.

5. Schüttung nach Anspruch 4, **dadurch gekennzeichnet, dass** die vordere Stirnseitenfläche (6) und die hintere Stirnseitenfläche (7) am schmalen Endbereich des Gehäuses durch eine planare seitliche Fläche (8) verbunden sind, insbesondere in deren Ebene der Mittelpunkt (M1) der Krümmung der vorderen konkaven Stirnseitenfläche (6) angeordnet ist, insbesondere wobei die Flächen jeweils durch einen Gehäusebereich mit gleichem Krümmungsradius (R3) miteinander verbunden sind und/oder dass die vordere Stirnseitenfläche (6) und die hintere Stirnseitenfläche (7) am breiten Endbereich des Gehäuses durch eine planare seitliche Fläche (10) verbunden sind, insbesondere in deren Ebene der Mittelpunkt (M2) der Krümmung der hinteren konvexen Stirnseitenfläche (7) angeordnet ist.

6. Schüttung nach Anspruch 4 oder 5, **dadurch gekennzeichnet, dass** die vordere Stirnseitenfläche (6) und die hintere Stirnseitenfläche (7) am breiten Endbereich des Gehäuses durch zwei konvexe Gehäusebereiche insbesondere unterschiedlich grosser Krümmungsradien (R4, R5) miteinander verbunden sind, insbesondere wobei ein Gehäusebereich mit dem kleineren Krümmungsradius (R4) an die vordere Stirnseitenfläche (6) angrenzt und der Gehäusebereich mit dem grösseren Krümmungsradius (R5) an die hintere Stirnseitenfläche (7).

7. Schüttung nach Anspruch 6, **dadurch gekennzeichnet, dass** der breite Endbereich des Gehäuses einen planaren Flächenbereich (10) umfasst, der in einem Winkel ungleich Null zum planaren Flächenbereich (8) am schmalen Endbereich angeordnet ist.

8. Schüttung nach einem der vorherigen Ansprüche, **dadurch gekennzeichnet, dass** die Spulenwicklung (4) eine Querschnittsform aufweist, die zur Querschnittsform des Gehäuses korrespondiert, insbesondere wobei die Ebene der Spule (4) parallel zur Gehäuseoberfläche angeordnet ist.

9. Schüttung nach einem der vorherigen Ansprüche, **dadurch gekennzeichnet, dass** die Spulenwicklung (4) in einem gleich bleibenden Abstand zur Gehäuseoberfläche und Gehäuseunterfläche, insbesondere mittig zwischen diesen angeordnet ist, insbesondere wobei die Spulenwicklung (4) in einem gleich bleibenden Abstand zu den seitlichen Flächenbereiches (6,7,8,10) des Gehäuses verläuft.

10. Schüttung nach einem der vorherigen Ansprüche, **dadurch gekennzeichnet, dass** das Gehäuse ein Gehäuseunterteil (3) und ein Gehäuseoberteil (2) aufweist, die, insbesondere stoffschlüssig, miteinander verbunden sind und die Spulenwicklung (4) umgeben.

11. Schüttung nach Anspruch 10, **dadurch gekennzeichnet, dass** Gehäuseunterteil (3) und/oder das Gehäuseoberteil (2) eine Nut aufweist zur Aufnahme der Spulenwicklung (4), insbesondere wobei die Nut in einem gleich bleibenden Abstand zu den seitlichen Flächenbereiches (6,7,8,10) des Gehäuses verläuft.

12. Schüttung nach einem der vorherigen Ansprüche, **dadurch gekennzeichnet, dass** die Oberfläche und Unterfläche des Gehäuses in zueinander parallelen Ebenen angeordnet sind.

13. Schüttung nach einem der vorherigen Ansprüche, **dadurch gekennzeichnet, dass** die Oberfläche und Unterfläche des Gehäuses bei gleich bleibender Gehäusedicke in wenigstens einer Dimension gekrümmt sind, insbesondere wobei im Bereich des schmalen Endes die Ober- und Unterfläche des Gehäuses in zueinander parallelen Ebenen angeordnet sind.

## Claims

1. Tipping device for a refuse collection vehicle, comprising a receiving ridge (5), which is circle-segment-shaped at least in portions, for engaging under a receiving collar of a refuse bin and comprising an RFID antenna, which comprises a housing comprising an antenna winding arranged therein, and the coil winding (4) of the antenna (1) having a circle-segment-shaped extension at least in regions, **characterised in that** a front end face (6) of the housing is concave and has a radius of curvature (R1) such that said front end face (6) is positioned in a positive fit at least in regions against the convex outer face (5a) of the receiving ridge (5), more particularly the end region thereof, the circle-segment-shaped extension preferably projecting beyond the end of the receiving ridge (5).

2. Tipping device according to claim 1, **characterised in that** a rear end face (7) of the housing, which end face is opposite the concave front end face (6), is convex.

3. Tipping device according to claim 2, **characterised in that** the radius (R2) of the convex rear end face (7) is greater than the radius (R1) of the concave front end face (6).

4. Tipping device according to claim 3, **characterised in that** the centre points (M1, M2) of the curvatures of the two end faces (6, 7) diverge such that the housing tapers towards an end region.

5. Tipping device according to claim 4, **characterised in that** the front end face (6) and the rear end face (7) are connected at the narrow end region of the housing by a planar lateral surface (8), more particularly in the plane thereof of which the centre point (M1) of the curvature of the front concave end face (6) is arranged, the faces more particularly each being interconnected by a housing region having the same radius of curvature (R3), and/or in that the front end face (6) and the rear end face (7) are connected at the wide end region of the housing by a planar lateral surface (10), more particularly in the plane thereof of which the centre point (M2) of the curvature of the rear convex end face (7) is arranged.

6. Tipping device according to either claim 4 or claim 5, **characterised in that** the front end face (6) and the rear end face (7) are interconnected at the wide end region of the housing by two convex housing regions, more particularly of differently sized radii of curvature (R4, R5), a housing region having the smaller radius of curvature (R4) more particularly adjoining the front end face (6) and the housing region having the larger radius of curvature (R5) adjoining the rear end face (7).

7. Tipping device according to claim 6, **characterised in that** the wide end region of the housing comprises a planar surface region (10) which is arranged on the narrow end region at a non-zero angle to the planar end region (8).

8. Tipping device according to one of the preceding claims, **characterised in that** the coil winding (4) has a cross-sectional shape which corresponds to the cross-sectional shape of the housing, the plane of the coil (4) more particularly being arranged parallel to the top of the housing.

9. Tipping device according to one of the preceding claims, **characterised in that** the coil winding (4) is arranged at a constant distance from the top of the housing and the bottom of the housing, more particularly centrally therebetween, more particularly the coil winding (4) extending at a constant distance from the lateral surface regions (6, 7, 8, 10) of the housing.

10. Tipping device according to one of the preceding claims, **characterised in that** the housing has a housing lower part (3) and a housing upper part (2), which are interconnected, more particularly in a cohesive manner, and surround the coil winding (4).

11. Tipping device according to claim 10, **characterised in that** the housing lower part (3) and/or the housing upper part (2) has a groove for receiving the coil winding (4), the groove more particularly extending at a constant distance from the lateral surface regions (6, 7, 8, 10) of the housing.

12. Tipping device according to one of the preceding claims, **characterised in that** the top and the bottom of the housing are arranged in mutually parallel planes.

13. Tipping device according to one of the preceding claims, **characterised in that** the top and the bottom of the housing are curved in at least one dimension with a constant housing thickness, the top and the bottom of the housing more particularly being arranged in mutually parallel planes in the region of the narrow end.

## Revendications

1. Dispositif de décharge d'un véhicule d'enlèvement des ordures ménagères, comprenant une arête de réception (5), réalisée au moins par sections en forme de segment de cercle, pour enserrer un collet de réception d'une poubelle, et une antenne RFID, qui comporte un boîtier avec un enroulement d'antenne disposé dans ce dernier, et le bobinage (4) de l'antenne (1) présentant au moins par zones une allure en forme de segment de cercle, **caractérisé en ce qu'**une face frontale avant (6) du boîtier a une réalisation concave et présente un rayon de courbure (R1) tel que cette face frontale avant (6) s'applique par coopération de forme, au moins par zones, sur le côté extérieur convexe (5a) de l'arête de réception (5), en particulier sur la zone d'extrémité de ce dernier, l'allure en forme de segment de cercle dépassant de préférence de l'extrémité de l'arête de réception (5).

2. Dispositif de décharge selon la revendication 1, **caractérisé en ce qu'**une face frontale arrière (7) du boîtier, opposée à la face frontale avant (6) de réalisation concave, a une réalisation convexe.

3. Dispositif de décharge selon la revendication 2, **caractérisé en ce que** le rayon (R2) de la face frontale arrière convexe (7) est plus grand que le rayon (R1) de la face frontale avant (6) de réalisation concave.

4. Dispositif de décharge selon la revendication 3, **caractérisé en ce que** les centres (M1, M2) des courbures des deux faces frontales (6, 7) sont décalés de telle sorte que le boîtier se rétrécit dans la direction d'une zone d'extrémité.

5. Dispositif de décharge selon la revendication 4, **caractérisé en ce que** la face frontale avant (6) et la face frontale arrière (7) sont assemblées sur la zone d'extrémité étroite du boîtier par une face planaire (8), dans le plan de laquelle est en particulier disposé le centre (M1) de la courbure de la face frontale concave avant (6), les faces étant en particulier assemblées entre elles par une zone de boîtier de rayon de courbure égal (R3), et/ou que la face frontale avant (6) et la face frontale arrière (7) sont assemblées sur la zone d'extrémité large du boîtier par une face planaire (10), dans le plan de laquelle est en particulier disposé le centre (M2) de la courbure de la face frontale convexe arrière (7).

6. Dispositif de décharge selon l'une des revendications 4 et 5, **caractérisé en ce que** la face frontale avant (6) et la face frontale arrière (7) sont assemblées entre elles sur la zone d'extrémité large du boîtier par deux zones de boîtier convexes en particulier de rayons de courbure (R4, R5) différemment grands, une zone de boîtier de rayon de courbure plus petit (R4) étant en particulier limitrophe à la face frontale avant (6) et la zone de boîtier de rayon de courbure plus grand (R5) étant limitrophe à la face frontale arrière (7).

7. Dispositif de décharge selon la revendication 6, **caractérisé en ce que** la zone d'extrémité large du boîtier comporte une zone de face planaire (10), qui est disposée sous un angle inégal à zéro par rapport à la zone de face planaire (8) sur la zone d'extrémité étroite.

8. Dispositif de décharge selon l'une des revendications précédentes, **caractérisé en ce que** le bobinage (4) présente une forme de section transversale qui correspond à la forme de section transversale du boîtier, le plan de la bobine (4) étant en particulier disposé parallèlement à la face supérieure du boîtier.

9. Dispositif de décharge selon l'une des revendications précédentes, **caractérisé en ce que** le bobinage (4) est disposé à une distance constante par rapport à la face supérieure du boîtier et à la face inférieure du boîtier, a en particulier une disposition centrale entre ces dernières, le bobinage (4) s'étendant en particulier à une distance constante par rapport aux zones de faces (6, 7, 8, 10) du boîtier.

10. Dispositif de décharge selon l'une des revendications précédentes, **caractérisé en ce que** le boîtier présente une partie inférieure de boîtier (3) et une partie supérieure de boîtier (2), qui sont assemblées entre elles, en particulier par alliance de matière, et entourent le bobinage (4).

11. Dispositif de décharge selon la revendication 10, **caractérisé en ce que** la partie inférieure de boîtier (3) et/ou la partie supérieure de boîtier (2) présentent une gorge pour recevoir le bobinage (4), la gorge s'étendant en particulier à une distance constante par rapport aux zones de faces (6, 7, 8, 10) du boîtier.

12. Dispositif de décharge selon l'une des revendications précédentes, **caractérisé en ce que** la face supérieure et la face inférieure du boîtier sont disposées dans des plans parallèles entre eux.

13. Dispositif de décharge selon l'une des revendications précédentes, **caractérisé en ce que** la face supérieure et la face inférieure du boîtier, pour une épaisseur de boîtier constante, sont courbées dans au moins une dimension, la face supérieure et la face inférieure du boîtier étant en particulier disposées dans des plans parallèles entre eux dans la zone de l'extrémité étroite.
